# EUROPEAN PATENT APPLICATION

(11) **EP 3 336 305 A1**
(43) Date of publication of application: **20.06.2018**
(21) Application number: 16205071.0
(22) Date of filing: 19.12.2016
(51) Int. Cl.: E21B 43/08, B01D 39/20, B01D 29/46

(54) **SEPARATING DEVICE, PROCESS FOR MAKING A SEPARATING DEVICE, AND USE OF A SEPARATING DEVICE**

(71) Applicant: 3M Innovative Properties Company, Saint Paul, MN 55133-3427 (US)
(72) Inventor: Lange, Dietrich, 87480 Weitnau (DE); Victor, Georg, 87487 Wiggensbach (DE); Meschke, Frank, 87474 Buchenberg (DE)
(74) Representative: Mössner, Brigitte

(57) **Abstract**

A separating device for removing solid particles from fluids, a process for making said separating device and the use of said separating device for removing solid particles from fluids in e.g. a process for extracting fluid from hydrocarbon extraction wells or water. The separating device comprising a concentric stack of at least three annular discs (7) defining a central annular region along a central axis, each annular disc having a first major surface (8) with at least one spacer (9), whereby the discs, when stacked, define a first planar contact area (10) and a first separating gap (14). The discs are joined together by diffusion welding. Each annular disc comprises a material selected from the group consisting of (i) ceramic materials; (ii) mixed materials having fractions of ceramic or metallic hard materials and a metallic binding phase; and (iii) powder metallurgical materials with hard material phases formed in-situ.

## Description

### Technical Field

The present disclosure relates to a separating device for the removal of solid particles from a fluid, and to a process for making such a separating device.

### Background

Such separating devices are required in many oil and gas extraction wells. Mineral oil and natural gas are stored in naturally occurring underground reservoirs, the oil or gas being distributed in more or less porous and permeable mineral layers. The aim of every oil or gas drill hole is to reach the reservoir and exploit it in such a way that, as far as possible, only saleable products such as oil and gas are extracted, while undesired by-products are minimized or even avoided completely. The undesired by-products in oil and gas extraction include solid particles such as sands and other mineral particles that are entrained from the reservoir up to the borehole by the liquid or gas flow. Depending on the permeability of the geological layer and the formation pressure, the flow rates of the solids-laden liquid and gas flow can become very high, up to 15 m/sec, and in individual cases even higher.

Since the mineral sands are often abrasive, the influx of such solids into the production tubing and pump cause considerable undesired abrasive and erosive wear on all of the technical internals of the borehole. It is therefore endeavoured to free the production flow of undesired sands directly after it leaves the reservoir, that is to say while it is still in the borehole, by filter systems.

Problems of abrasion and erosion in the removal of solid particles from liquid and gas flows are not confined to the oil and gas industry, but may also occur in the extraction of water. Water may be extracted for the purpose of obtaining drinking water or else for the obtainment of geothermal energy. The porous, often loosely layered reservoirs of water have the tendency to introduce a considerable amount of abrasive particles into the material that is extracted. In these applications too, there is the need for abrasion- and erosion-resistant filters. Also in the extraction of ore and many other minerals, there are problems of abrasion and erosion in the removal of solid particles from liquid and gas flows.

In oil and gas extraction, the separation of undesired particles is usually achieved today by using filters that are produced by spirally winding and welding steel forming wires onto a perforated basepipe. Such filters are referred to as "wire wrap filters". Another commonly used type of construction for filters in oil and gas extraction is that of wrapping a perforated basepipe with metal screening meshes. These filters are referred to as "metal mesh screens". Both methods provide filters with effective screen apertures of 75 µm to 350 µm. Depending on the type of construction and the planned intended use of both these types of filter, the filtering elements are additionally protected from mechanical damage during transport and introduction into the borehole by an externally fitted, coarse-mesh cage. The disadvantage of these types of filter is that, under the effect of the abrasive particles flowing at high speed, metal structures are subject to rapid abrasive wear, which quickly leads to destruction of the filigree screen structures. Such high-speed abrasive flows often occur in oil and/or gas extraction wells, which leads to considerable technical and financial maintenance expenditure involved in changing the filters. There are even extraction wells which, for reasons of these flows, cannot be controlled by the conventional filtering technique, and therefore cannot be commercially exploited. Conventional metallic filters are subject to abrasive and erosive wear, since steels, even if they are hardened, are softer than the particles in the extraction wells, which sometimes contain quartz.

There is therefore a great need to counter the abrasive flows of sand with abrasion-resistant screen structures.

US 2011/0220347 A1, US 8,833,447 B2, US 8,662,167 B2 and WO 2016/018821 A1 propose filter structures in which the filter gaps, that is to say the functional openings of the filter, are created by stacking specially formed densely sintered annular discs of a brittle-hard material, preferably of a ceramic material. In this case, at least three spacers are arranged on the upper side of annular discs, distributed uniformly over the circular circumference of the discs.

A disadvantage of the structural designs proposed in US 2011/0220347 A1, US 8,833,447 B2 and US 8,662,167 B2 concerns the compression springs. These compression springs, configured as spiral springs, are intended to keep the pre-loading of the ceramic annular discs constant under changing ambient conditions, in particular changing temperature. The intended effect of the springs distributed over the circular circumference of the annular discs is to hold the discs together, and thus keep the filter gap width constant, with a force that is largely independent of ambient influences. Under certain operating conditions that can occur when the filters are actually being used in extraction operations, however, the springs behave in a way other than that desired. On account of the difference in pressure between the inflow side of the filter, which is generally on the outer circumferential surface of the annular discs, and the outflow side on the inner circumferential surface of the annular discs, axial compressive forces occur in the filter gap, it being possible for the axial forces to be considerable even when there is little difference in pressure, on account of the width of the annular discs. These axial forces may be greater than the resilient forces of the compression springs, which has the result that, as from a certain difference in pressure, the springs yield and one or more filter gaps change in an undesired way, which results in loss of the desired and intended filtering effect.

In WO 2016/018821 A1, no compression springs are used. The brittle-hard annular discs of the sand filter disclosed in WO 2016/018821 A1 are stacked on a perforated pipe located inside the annular stack. WO 2016/018821 A1 discloses a compensating bush to compensate for the differing thermal change in length of the perforated pipe and of the annular stack. The compensating bush preferably consists of a material on the basis of polytetrafluoroethylene (PTFE), a material with a very high thermal expansion.

In applications where the sand filter has to withstand high temperatures of about 200 °C and high pressures of 2500 psi (corresponding to 172 bar or 17.2 MPa), the creep resistance and compressibility of PTFE may be not sufficient.

US 2011/0220347 A1 discloses also an alternative sand filter comprising a plurality of bush-shaped elements of a brittle-hard material with slits with a slit width of 0.05 to 1 mm being formed in the bush-shaped elements. The slits are difficult to manufacture with appropriate accuracy.

Therefore, there is still a need to provide an improved wear-resistant separating device for the removal of solid particles from fluids, in particular from oil, gas and water.

### Summary

In a first aspect, the present disclosure relates to a separating device for removing solid particles from a fluid, comprising
a concentric stack of at least three annular discs defining a central annular region along a central axis, each annular disc having first and second opposed major surfaces that are perpendicular to the central axis, wherein the first major surfaces of a first annular disc and a second annular disc each have at least one spacer, wherein the first major surface of the first annular disc is joined to the second major surface of the second annular disc defining a first planar contact area and a first separating gap, and the first major surface of the second annular disc is joined to the second major surface of the third annular disc, defining a second planar contact area and a second separating gap, and
wherein each annular disc comprises a material independently selected from the group consisting of (i) ceramic materials; (ii) mixed materials having fractions of ceramic or metallic hard materials and a metallic binding phase; and (iii) powder metallurgical materials with hard material phases formed in-situ.

In another aspect, the present disclosure also relates to a process for making the separating device disclosed herein, comprising:
joining the annular discs into the central annular region, wherein joining comprises bringing the annular discs into contact with one another and diffusion welding the annular discs in the presence of a shielding gas atmosphere;
further wherein the joining takes place at a temperature of at least 1600 °C and a load of at least 10 kPa with a temperature-holding time of at least 10 minutes; and
further wherein the central annular region is a monolithic body.

In yet a further aspect, the present disclosure relates to the use of the separating device disclosed herein for removing solid particles from a fluid
in a process for extracting fluids from extraction wells, or
in naturally occurring bodies of water or in storage installations for fluids, or
in a process for extracting ores and minerals.

In some embodiments, the separating device of the present disclosure does not require compression springs or other elements that generate compressive loads for maintaining the stack of annular discs together in order to maintain filter gap width.

In yet further embodiments, the separating device of the present disclosure does not require compensating elements such as compensating bushes or springs to compensate for the differing thermal change in length of the perforated pipe and of the stack of annular discs.

Furthermore, in some embodiments of the present disclosure, time-consuming stacking of individual annular discs during filter assembly is avoided. Mounting a joined stack of annular discs is much faster and preloading and adjustment of spring loads may not be required.

Undesired gap widening of the separating gaps and loss of sand control are prevented by the separating device of the present disclosure.

As used herein, the technical term "loss of sand control", LSC for short, means the event when the filter allows coarser particles than correspond to the filter width to pass through.

### Brief description of the drawings

The present disclosure is explained in more detail on the basis of the drawings, in which
Figure 1 schematically shows the overall view of a separating device as disclosed herein;
Figures 2 a - 2 b show a cross-sectional view of the separating device as disclosed herein;
Figures 3 a - 3 b show a cross-sectional view of a separating device as disclosed herein;
Figures 4 a - 4 g show various views of an annular disc as disclosed herein with 24 spacers on the first major surface of the annular disc;
Figures 5 a - 5 e respectively show a detail of the first major surface of an annular disc as disclosed herein with variously configured spacers;
Figures 6 a - 6 e schematically show various views of a concentric stack of joined annular discs with annular discs according to Figures 4 a - 4 g;
Figures 7 a - 7 b shows various views of a separating device as disclosed herein; and
Figure 8 shows a fracture surface of a diffusion welded stack of annular discs after the burst pressure test.

### Detailed Description

Preferred embodiments and details of the separating device of the present disclosure are explained in more detail below with reference to the drawings.

Various embodiments of the separating device according to the present disclosure are described below.

The separating devices may comprise the described basic elements that are designed appropriately for the materials and made to match one another.

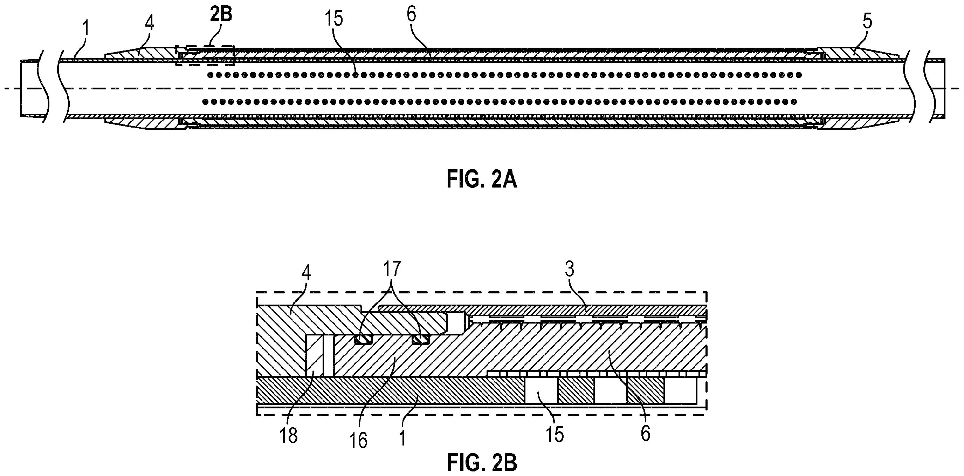

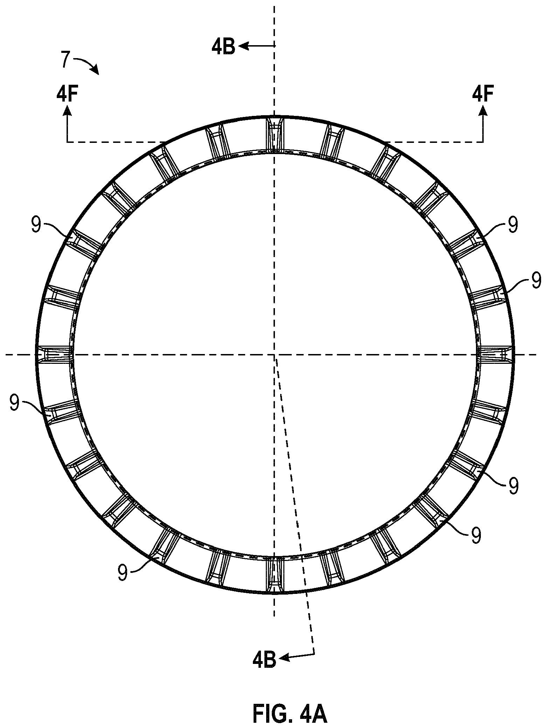

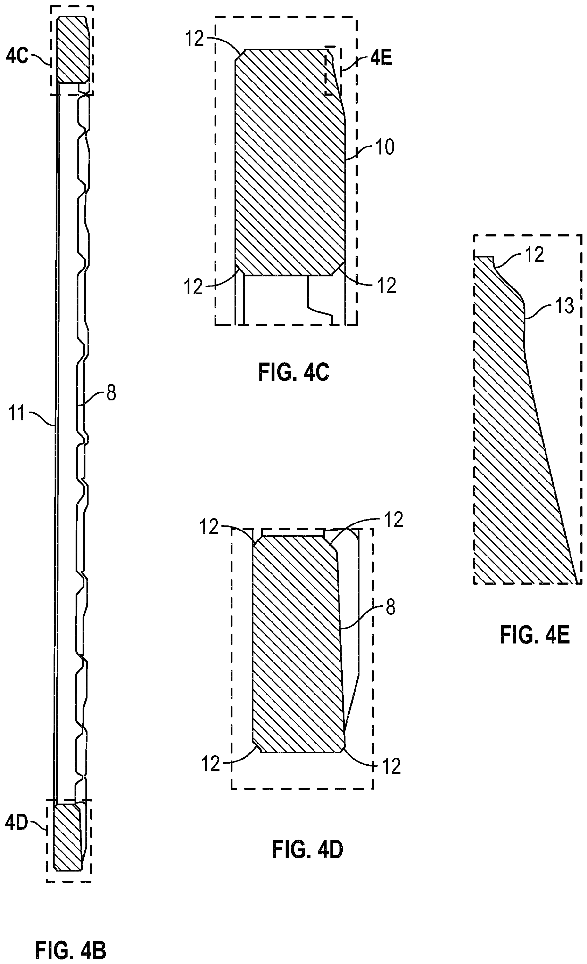

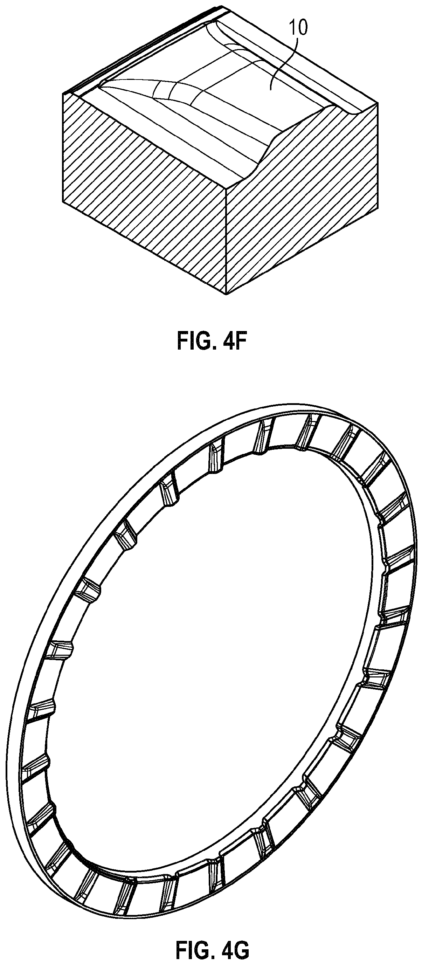

The separating devices may contain a concentric stack of at least three annular discs defining a central annular region 6 (see Figures 2 a - 2 b, 3 a - 3 b and 6 a - 6 e) along a central axis. The annular discs 7 (see Figures 4 a - 4 g) have first 8 and second 11 opposed major surfaces (see Figure 4 b) that are perpendicular to the central axis. The first major surface 8 of a first annular disc and the first major surface 8 of a second annular disc each have at least one spacer 9. The first major surface 8 of the first annular disc is joined to the second major surface 11 of the second annular disc, defining a first planar contact area 10 and a first separating gap 14, and the first major surface 8 of the second annular disc is joined to the second major surface 11 of the third annular disc, defining a second planar contact area 10 and a second separating gap 14.

The first major surface 8 of the first annular disc and the first major surface 8 of a second annular disc each may have, and typically has, more than one spacer 9. Preferably, the first major surface 8 of the first annular disc and the first major surface 8 of a second annular disc have at least two spacers, more preferably at least 5 spacers. If the first major surface 8 of the first annular disc and the first major surface 8 of a second annular disc have more than one spacer, they may be distributed uniformly over its circumference.

The central annular region can, and typically does, comprise more than 3 annular discs. The number of annular discs in the central annular region can be from 3 to 500, but also larger numbers of annular discs are possible. For example, the central annular region can comprise 50, 100, 250 or 500 annular discs. Each additional annular disc also has first and second opposed major surfaces that are perpendicular to the central axis, wherein the first major surface 8 of each additional disc has at least one spacer. The first major surface 8 of each additional annular disc is joined to the second major surface 11 of an adjacent annular disc, defining a planer contact area 10 and a separating gap 14.

The first major surface 8 of each additional annular disc may have, and typically has, more than one spacer 9. The first major surface 8 of each additional disc may have at least two spacers, or at least 3 spacers, or at least 5 spacers. If the first major surface 8 of an additional annular disc has more than one spacer, they may be distributed uniformly over its circumference.

The annular discs 7 of the central annular region 6 are stacked and joined with one another, resulting in a joined body of annular discs. By joining, the individual annular discs are joined into the central annular region and are firmly connected with one another. In a preferred embodiment of the separating device, the central annular region is a monolithic body.

The contact area 10 of the spacers 9 of the first major surface is planar, so that the spacers 9 have planiform contact with the second major surface of the adjacent annular disc. The annular discs are stacked and joined in such a way that between the individual discs there is in each case a separating gap 14 for the removal of solid particles. The joining of the individual stacked annular discs takes place at the planar contact area of the spacers.

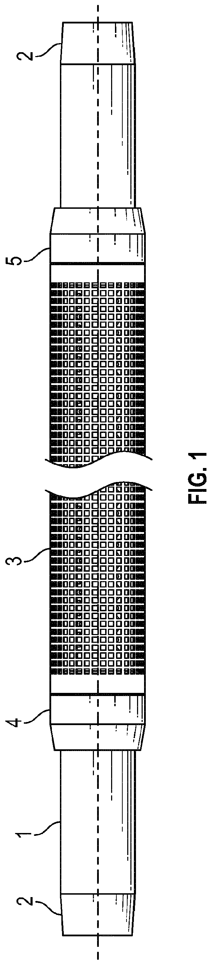

In some embodiments of the separating device, a perforated pipe 1 is located in the central annular region 6 (see Figures 1, 2 a - 2 b and 3 a - 3 b). The perforated pipe is co-centric with the central annular region.

Figure 1 shows the overall view of a separating device of the present disclosure according to a first embodiment. The separating device has a perforated pipe 1 located in the central annular region. Usually provided at both ends of the perforated pipe 1 are threads 2, by way of which the separating device can be connected to further components, either to further separating devices or to further components of the extraction equipment.

In some embodiments, the separating device comprises an annular end disc 16 at the upper end of the central annular region and an annular end disc 16 at the lower end of the central annular region (see Figures 2 a - 2 b and 3 a - 3 b). The annular end discs are preferably connected with the central annular region by joining. In a preferred embodiment, a monolithic body of the central annular region and of the annular end discs is obtained by joining of the annular end discs with the central annular region.

In some embodiments, the separating device comprises two end caps 4, 5 (see Figures 1, 2 a - 2 b and 3 a - 3 b) at the upper and lower ends of the central annular region 6. In a further embodiment of the separating device, the end caps 4, 5 are firmly connected to the basepipe 1.

In some embodiments, the separating device comprises a sealing system 17 at the upper end of the central annular region and a sealing system 17 at the lower end of the central annular region (see Figures 2 a - 2 b and 3 a - 3 b).

For better understanding, and since the separating device according to the present disclosure is generally introduced into an extraction borehole in vertical alignment, the terms "upper" and "lower" are used here, but the separating device may also be positioned in horizontal orientation in the extraction borehole (in which case, upper typically would refer to the most upstream portion and lower would refer to the most downstream portion of the separating device, when in service).

### Central annular region

In Figures 4 a - 4 g, one embodiment of the annular discs 7 that are used for the separating device as disclosed herein is represented. Block of Figures 4 shows the design of the annular discs for an embodiment with 24 spacers on the first major surface of the annular disc. Figure 4 a shows a plan view of the annular disc 7, Figure 4b shows a cross-sectional view along the sectional line denoted in Figures 4 a by "4 b", Figures 4c - 4e show enlarged details of the cross-sectional view of Figure 4b, Figures 4f shows a 3D representation along the sectional line denoted in Figure 4 a by "4 f", and Figure 4 g shows a 3D view of the annular disc. The configuration of the spacers represented in Figures 4 a - 4 g is a preferred form of the spacers.

Each annular disc comprises a material independently selected from the group consisting of (i) ceramic materials; (ii) mixed materials having fractions of ceramic or metallic hard materials and a metallic binding phase; and (iii) powder metallurgical materials with hard material phases formed in-situ.

In some embodiments, the annular discs are produced from a material which is independently selected from the group consisting of (i) ceramic materials; (ii) mixed materials having fractions of ceramic or metallic hard materials and a metallic binding phase; and (iii) powder metallurgical materials with hard material phases formed in-situ. These materials are typically chosen based upon their relative abrasion- and erosion-resistance to solid particles such as sands and other mineral particles and also corrosion-resistance to the extraction media and the media used for maintenance, such as for example acids.

The material which the annular discs comprise can be independently selected from this group of materials, which means that each annular disc could be made from a different material. But for simplicity of design and manufacturing, of course, all annular discs of the separating device could be made from the same material.

The ceramic materials which the annular discs can comprise or from which the annular discs are made can be selected from the group consisting of (i) oxidic ceramic materials; (ii) non-oxidic ceramic materials; (iii) mixed ceramics of oxidic and non-oxidic ceramic materials; (iv) ceramic materials having a secondary phase; and (v) long- and/or short fiber-reinforced ceramic materials.

In some embodiments of the separating device, the axial projection of the annular discs at the inner and the outer circumference is circular. Such annular discs therefore would not have any strength-reducing grooves or nuts or clearances on their inner and outer circumferential surfaces. Further, such annular discs would have a continuous outer and inner circumference. The circular shape, which may be ideal from a structural design viewpoint, has the potential benefit that concentrations of stress as a result of pressure loading are largely avoided.

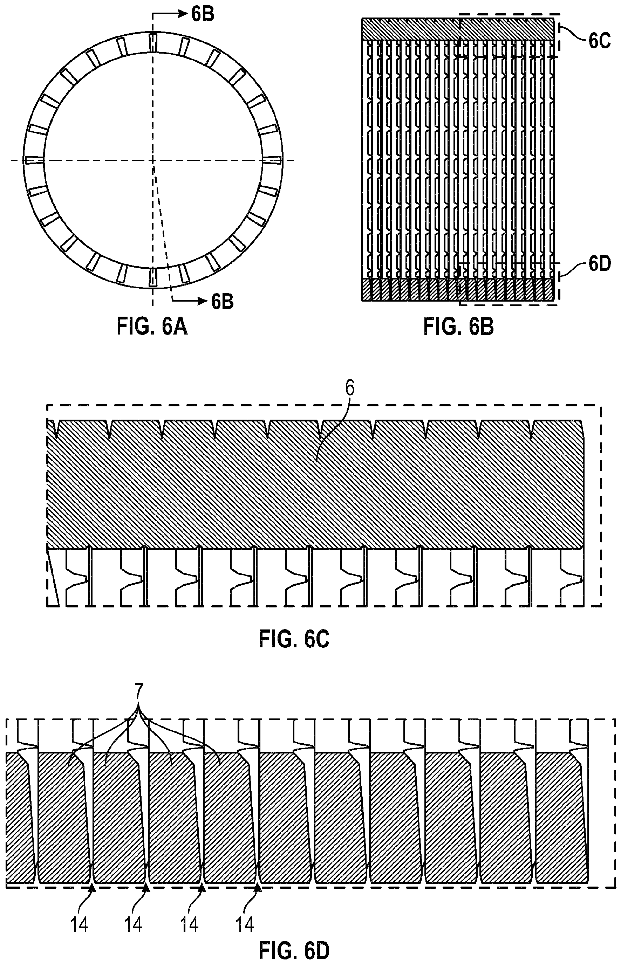

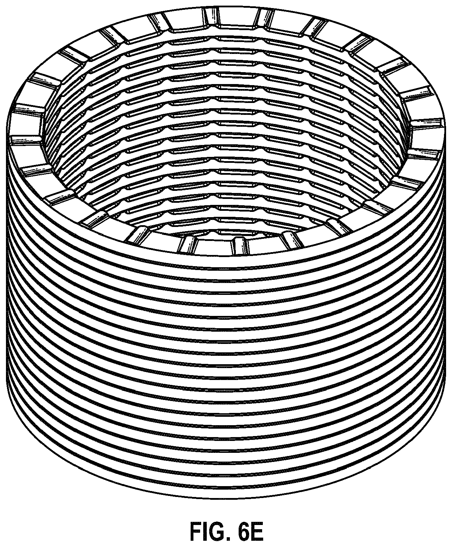

Figures 6 a - 6 e schematically show a central annular region 6 constructed from annular discs 7 of Figures 4 a - 4 g. Figure 6 a shows a plan view of the central annular region, Figure 6b shows a cross-sectional view along the sectional line denoted in Figure 6 a by "6 b". Figures 6c and 6d show enlarged details of the cross-sectional view from Figure 6b. Figure 6e shows a 3D view of the central annular region 6.

The removal of the solid particles takes place at the inlet opening of a separating gap 14, which may be divergent, i.e. opening, in the direction of flow (see Figures 6b and 6d) and is formed between two annular discs lying one over the other. The annular discs are designed appropriately for the materials from which the annular discs are produced and the operational environment intended for the devices made with such annular discs, e.g., materials may be chosen for given pressure, temperature and corrosive operating conditions, and so that cross-sectional transitions may be configured without notches so that the occurrence of flexural stresses is largely avoided by the structural design.

The annular discs 7 (see Block of Figures 4) have on their first major surface 8 at least three spacers 9 distributed uniformly over the circumference of the discs and of a defined height, with the aid of which the height of the separating gap 14 (gap width of the filter gap, filter width) is set. The spacers are not separately applied or subsequently welded-on spacers, they are formed directly in production, during the shaping of the annular discs.

In some embodiments, the contact area 10 of the spacers 9 is planar (see Figures 4c, 4f), so that the spacers 10 have planiform contact with the second major surface 11 of the adjacent annular disc. The first major surface 8 of the annular discs is plane-parallel with the second major surface 11 of the annular discs in the region of the contact area 10 of the spacers 9, i.e. in the region of contact with the adjacent annular disc 7. The second major surface 11 of the annular discs is formed as smooth and planar and at right angles to the disc axis. At the planar contact area of the spacers, the joining of the annular discs with one another takes place.

Of course, as described herein, "planar", "plane-parallel" and "at right angles" (and similar terms) mean substantially so, within, for instance, relevant manufacturing, assembly and/or operational tolerances.

The first major surface 8 of the annular discs may be inwardly or outwardly sloping, particularly inwardly sloping, in the regions between the spacers. If the first major surface of the annular discs is inwardly or outwardly sloping in the regions between the spacers, in the simplest case, the sectional line on the first major surface of the ring cross-section of the annular discs is straight and the ring cross-section of the annular discs in the portions between the spacers is trapezoidal (see Figure 4 d), the thicker side of the ring cross-section having to lie on the respective inlet side of the flow to be filtered. If the flow to be filtered comes from the direction of the outer circumferential surface of the central annular region, the thickest point of the trapezoidal cross-section must lie on the outside and the first major surface of the annular discs is inwardly sloping. If the flow to be filtered comes from the direction of the inner circumferential surface of the annular disc, the thickest point of the trapezoidal cross-section must lie on the inside and the first major surface of the annular discs is outwardly sloping. The forming of the ring cross-section in a trapezoidal shape, and consequently the forming of a separating gap that diverges in the direction of flow, has the advantage that, after passing the narrowest point of the filter gap, irregularly shaped particles, i.e. non-spherical particles, tend much less to get stuck in the filter gap, for example due to rotation of the particles as a result of the flow in the gap. Consequently, a separating device with a divergent filter gap formed in such a way is less likely to become plugged and clogged than a separating device in which the separating gaps have a filter opening that is constant over the ring cross-section, in the case of which the first major surface of the annular disc and the second major surface of the annular disc are therefore parallel.

The outer contours of the annular discs may be configured with a bevel 12, as illustrated in Figures 4c - 4e. It is also possible to configure the annular discs with rounded edges. This may, for some applications, represent even better protection of the edges (versus straight edged) from the edge loading that is critical for the materials from which the annular discs are produced.

The circumferential surfaces (lateral surfaces) of the annular discs may be cylindrical. However, it is also possible to form the circumferential surfaces as outwardly convex, in order to achieve a better incident flow.

In practice, it is expected that the annular discs are produced with an outer diameter that is adapted to the borehole of the extraction well provided in the application concerned, so that the separating device according to the present disclosure can be introduced into the borehole with little play, in order to make best possible use of the cross-section of the extraction well for achieving a high delivery output. The outer diameter of the annular discs may be 20 - 250 mm, but outer diameters greater than 250 mm are also possible, as the application demands.

The radial ring width of the annular discs may lie in the range of 8 - 20 mm. These ring widths are suitable for separating devices with basepipe diameters in the range of 2⅜ to 5½ inches.

The axial thickness of the annular discs may be from 3 - 12 mm, more specifically from 4 - 7 mm.

The base thickness of the annular discs is measured in the region between the spacers and, in the case of a trapezoidal cross-section, on the thicker side in the region between the spacers.

The axial thickness of the annular discs in the region of the spacers corresponds to the sum of the base thickness and the filter width.

The height of the spacers determines the filter width of the separating device, that is to say the separating gap between the individual annular discs. The filter width additionally determines which particle sizes of the solid particles to be removed, such as for example sand and rock particles, are allowed to pass through by the separating device and which particle sizes are not allowed to pass through. The height of the spacers is specifically set in the production of the annular discs.

The filter width of the central annular region can be set to values between 10 µm and 5000 µm, preferably to values between 20 µm and 1000 µm and particularly preferably to values between 50 µm and 500 µm.

For any particular separating device, the annular discs may have uniform base thickness and filter width, or the base thickness and/or filter width may vary along the length of the separating device (e.g., to account for varying pressures, temperatures, geometries, particle sizes, materials, and the like).

The deviation of the annular discs from the ideal circular shape at the inner and the outer circumference may be less than 0.5%, with respect to the outside diameter of the ring. Thus, for example in the case of annular discs with an outside diameter of 170 mm that are used on a basepipe with an outside diameter of 5½ inches, corresponding to 139.7 mm, the roundness of the rings is less than 0.5% of 170 mm, that is to say less than 0.85 mm.

As already stated, the spacers arranged on the first major surface of the annular discs may have planiform contact with the adjacent annular disc. The spacers make a radial throughflow possible and therefore may be arranged radially aligned on the first major surface of the annular discs. The spacers may, however, also be aligned at an angle to the radial direction.

The spacers arranged on the first major surface of the annular discs may extend over the entire radial width of the annular discs. However, it is also possible that the spacers are aligned in such a way that they do not extend over the entire radial width of the surface of the annular discs, but only take up part of this width. In this case, the spacers preferably take up the part of the width of the annular discs that is located on the filter outlet side of the annular discs, which is generally at the inner circumference of the annular discs. If the spacers only take up part of the width of the annular discs, an increase in the number of spacers does not necessarily mean that there is an associated undesired decrease in the filter inlet area. These spacers are advantageous in that, with virtually the same supporting effect of the spacers, the annular inlet gap of the filter is not reduced by the spacers, or only a little, which leads to the desired greater filter inlet cross-section. The greater the filter inlet cross-section, the greater the volumetric flow that can be filtered. Conversely, when there is a small volumetric flow, the separating device can be made with a smaller configuration, which makes it economically more attractive and is conducive to it being installed in confined spaces.

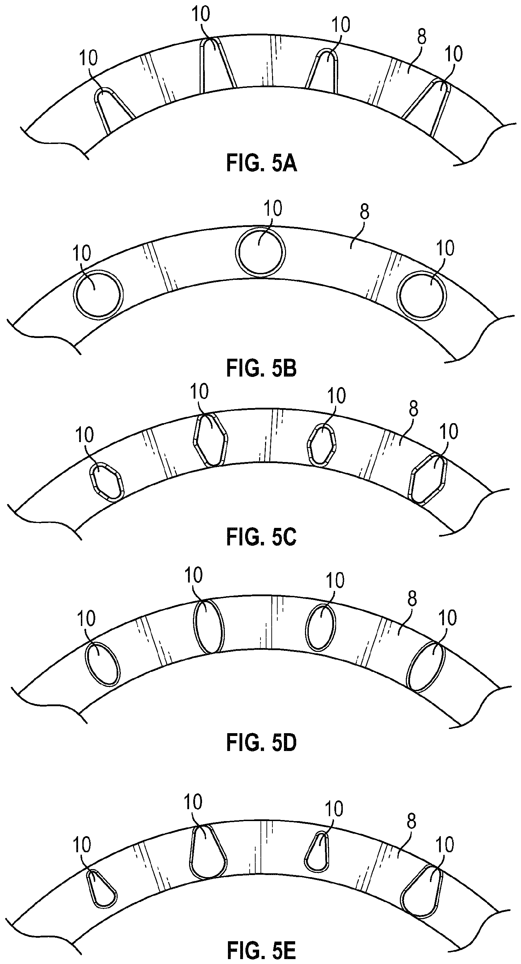

Spacers that only take up part of the radial width of the surface of the annular discs are preferably arranged on the annular discs in alternation with spacers that extend over the entire radial width. This is illustrated in Figures 5 a and also 5 c - 5 e. A detail of the first major surface of an annular disc is respectively represented here.

The transitions between the first major surface of the annular discs and the spacers are typically not formed in a step-shaped or sharp-edged manner. Rather, the transitions between the first major surface side of the annular discs and the spacers are typically configured appropriately for the material from which the annular discs are made, i.e. the transitions are made with radii that are gently rounded. This is illustrated in Figure 4 f.

The contact area 10 of the spacers 9, that is to say the planar area with which the spacers are in contact with and are joined with the adjacent annular disc are not particularly limited, and may be, for instance, rectangular, round, rhomboidal, elliptical, trapezoidal or else triangular, while the shaping of the corners and edges should always be appropriate for the material from which the annular discs are made, e.g. rounded. Various configurations of the spacers with various contact areas 10 are represented in Figures 5 a - 5 e.

One possible embodiment of spacers that only take up part of the radial width of the surface of the annular discs is shown by Figure 5 a. The form of the spacers that is represented in Figure 5 a is approximately triangular, i.e. triangular with edges rounded off appropriately for ceramic. This form is advantageously designed in such a way that the flow cross-section in the filter gap does not decrease in the direction of flow. The width of the contact area of these spacers increases inwardly, while the first major surface of the annular disc slopes inwardly. According to the operationally dependent direction of flow, the narrow side of the approximately triangular spacer may be facing towards or away from the centre point of the ring.

The width of the contact area 10 of the spacers is measured in the radial direction, as the greatest extent in the radial direction. The width of the contact area of the spacers is less than or equal to the radial width of the annular discs and is preferably at least 60% of the radial ring width. The width of the spacers may be shortened slightly at the outer circumference of the annular discs for the incorporation of measuring reference areas 13, for example by approximately 0.3 mm (see Figure 4 e). The measuring reference areas serve for simplified measurement of the filter width, in particular automated measurement.

The length of the contact area 10 of the spacers is measured in the circumferential direction, as the greatest extent in the circumferential direction. The length of the contact area of the spacers is typically between 1 mm and 12 mm, and more specifically between 2 mm and 5 mm. These lengths have proven to be particularly successful in pressure tests and in the production of the annular discs.

Depending on the size of the annular discs, the contact area 10 of the individual spacers is typically between 4 and 60 mm², more specifically between 10 and 35 mm².

The planar contact area of the first major surface of an annular disc can be from 2 to 80%, specifically from 5 to 30%, of the surface area of the first major surface of the annular disc. The planar contact area of the first major surface of an annular disc is the total planar contact area of all individual spacers of an annular disc together.

If more than one spacer is present on the first major surface of the annular disc, the spacers 9 may be arranged uniformly over the circumference of the annular discs (see Block of Figures 4). The number of spacers may be even or odd. The fluid pressure acting in the filter gap when it is being flowed through also exerts flexural stress on the annular discs. The interspace or span, determining the pressure resistance, is the distance between adjacent spacers. The fewer spacers are arranged on the annular discs, the lower the pressure resistance of the separating device. Although the free filter area decreases undesirably with an increasing number of spacers, in return the pressure resistance of the filter system increases, since the interspace or span decreases. For instance, at least 3 spacers may be provided, or even at least 5, or even at least 10, or further even at least 15. The number of spacers can be selected according to the application concerned or the pressure conditions to be expected, and depending on the mechanical properties of the material that is used for the annular discs. The higher the pressures to be expected during operation, the more spacers should be provided in the structural design. The larger the annular discs, the more spacers should generally be provided in the structural design. Thus, for annular discs with an outside diameter of 100 mm (for a base-pipe outside diameter of 2⅞ inches), for example, 16 spacers may be provided, in the case of an outside diameter of 115 mm (for a base-pipe outside diameter of 3½ inches), for example, 18 spacers may be provided and in the case of an outside diameter of 168 mm (for a base-pipe outside diameter of 5½ inches), for example, 24 spacers may be provided.

The distance between the spacers is measured in the circumferential direction as the distance between the centres of the contact areas of the spacers along the inside diameter. The distance between the spacers may be in the range of 8 to 50 mm, more specifically between 10 and 30, or between 15 and 25 mm. The distance between the spacers has an influence on the resistance to internal and external pressure loading, as can occur in the test for internal and external pressure resistance according to ISO 17824 and also under operating conditions. The smaller the distance between the spacers, the greater the internal and external pressures that the separating device withstands before loss of the filtering effect occurs.

The distance between the spacers can be used to derive the number of spacers for the various sizes of the annular discs. For outside diameters of the annular discs in the range of 80 to 110 mm, from 6 to 35 spacers are typically provided, more specifically from 9 to 28, or even from 11 to 19. For outside diameters of the annular discs in the range of from 110 to 140 mm, from 7 to 42 spacers are provided, more specifically from 11 to 33, or even from 13 to 22. For outside diameters of the annular discs in the range of from 140 to 200 mm, from 10 to 62 spacers are typically provided, more specifically from 16 to 49, or even from 20 to 33.

In some embodiments of the separating device, the annular discs are stacked in such a way that the spacers lie on top of each other. If the joining process of the annular discs is a diffusion welding process, the annular discs are stacked in such a way that the spacers lie on top of each other.

As already described above, the annular discs comprise or are produced from a material which is independently selected from the group consisting of (i) ceramic materials; (ii) mixed materials having fractions of ceramic or metallic hard materials and a metallic binding phase; and (iii) powder metallurgical materials with hard material phases formed in-situ. The ceramic materials which the annular discs can comprise or are produced from can be selected from the group consisting of (i) oxidic ceramic materials; (ii) non-oxidic ceramic materials; (iii) mixed ceramics of oxidic and non-oxidic ceramic materials; (iv) ceramic materials having a secondary phase; and (v) long- and/or short fibre-reinforced ceramic materials.

Examples of oxidic ceramic materials are materials chosen from Al₂O₃, ZrO₂, mullite, spinel and mixed oxides. Examples of non-oxidic ceramic materials are SiC, B₄C, TiB₂ and Si₃N₄. Ceramic hard materials are, for example, carbides and borides. Examples of mixed materials with a metallic binding phase are WC-Co, TiC-Fe and TiB2-FeNiCr. Examples of hard material phases formed in situ are chromium carbides. An example of fiber-reinforced ceramic materials is C/SiC. The material group of fiber-reinforced ceramic materials has the advantage that it leads to still greater internal and external pressure resistance of the separating devices on account of its greater strength in comparison with monolithic ceramic.

The aforementioned materials are distinguished by being harder than the typically occurring hard particles, such as for example sand and rock particles, that is to say the HV (Vickers) or HRC (Rockwell method C) hardness values of these materials lie above the corresponding values of the surrounding rock. Materials suitable for the annular discs of the separating device according to the present disclosure have HV hardness values greater than 11 GPa, or even greater than 20 GPa.

All these materials are at the same time distinguished by having greater brittleness than typical unhardened steel alloys. In this sense, these materials are referred to herein as "brittle-hard".

Materials suitable for the annular discs of the separating device according to the present disclosure have moduli of elasticity greater than 200 GPa, or even greater than 350 GPa.

Materials with a density of at least 90%, more specifically at least 95%, of the theoretical density may be used, in order to achieve the highest possible hardness values and high abrasion and erosion resistances. Sintered silicon carbide (SSiC) or boron carbide may be used as the material for the annular discs. These materials are not only abrasion-resistant but also corrosion-resistant to the treatment fluids usually used for flushing out the separating device and stimulating the borehole, such as acids, for example HCl, bases, for example NaOH, or else steam.

Particularly suitable are, for example, SSiC materials with a fine-grained microstructure (mean grain size ≤ 5 µm), such as those sold for example under the names 3M^{™} silicon carbide type F and 3M^{™} silicon carbide type F plus from 3M Technical Ceramics, Kempten, Germany. Furthermore, however, coarse-grained SSiC materials may also be used, for example with a bimodal microstructure. In one embodiment, 50 to 90% by volume of the grain size distribution consisting of prismatic, platelet-shaped SiC crystallites of a length of from 100 to 1500 µm and 10 to 50% by volume consisting of prismatic, platelet-shaped SiC crystallites of a length of from 5 to less than 100 µm (3M^{™} silicon carbide type C from 3M Technical Ceramics, Kempten, Germany).

Apart from these single-phase sintered SSiC materials, liquid-phase-sintered silicon carbide (LPS-SiC) can also be used as the material for the annular discs. An example of such a material is 3M^{™} silicon carbide type T from 3M Technical Ceramics, Kempten, Germany. In the case of LPS-SiC, a mixture of silicon carbide and metal oxides is used as the starting material. LPS-SiC has a higher bending resistance and greater toughness, measured as a Klc value, than single-phase sintered silicon carbide (SSiC).

The annular discs of the separating device disclosed herein may be prepared by the methods that are customary in technical ceramics or powder metallurgy, that is to say by die pressing of pressable starting powders and subsequent sintering. The annular discs may be formed on mechanical or hydraulic presses in accordance with the principles of "near-net shaping", debindered and subsequently sintered to densities > 90% of the theoretical density. When the size distribution of the filter width has to meet high requirements, i.e. when an exact mean value and small tolerances of the filter width are required, the annular discs may be subjected to 2-sided facing on their first and second major surface. Methods for the two-sided facing include lapping, flat honing and grinding. The facing of the annular discs may allow the heights of the flat-formed spacers to be set to accuracies in the micrometer range.

The planarity of the annular discs on both sides should be better than 30 µm, better than 15 µm or even better than 5 µm.

As already described above, the annular discs 7 of the central annular region 6 may be stacked and joined with one another, resulting in a joined body of annular discs. By joining, the individual annular discs are joined into the central annular region and are firmly connected with one another. By joining, the individual annular discs are substance-to-substance bonded with one another.

For joining of the annular discs, several methods can be applied. It is possible to join the annular discs by brazing or soldering with a metallic solder. Another method for joining of the annular discs is by bringing them into close contact when they are still green, i.e. prior to sintering, and then sintering the stack of annular discs.

It is also possible to join the annular discs by thermal sintering, with or without the application of pressure, depending on the material.

In a particular method for joining of the annular discs into the central annular region, the annular discs are brought into contact with one another and are diffusion welded in the presence of a shielding gas atmosphere. The joining takes place at a temperature of at least 1600 °C and a load of at least 10 kPa with a temperature-holding time of at least 10 minutes. The load is based on the contact area during the joining process which is the total planar contact area of all spacers of an individual annular disc. With this method for joining the annular discs into the central annular region, a monolithic body of stacked annular discs may be formed and the central annular region may be a monolithic body.

In the diffusion welding process, the annular discs can experience plastic deformation in the direction in which force is introduced of less than 5% during the joining step, or even less than 1%, and the creep rate of the annular discs during the joining step may be lower than 2*10⁻⁴ 1/s, even lower than 8*10⁻⁵ 1/s, or even lower than 2*10⁻⁵ 1/s.

The diffusion welding process can be a hot-pressing process.

The diffusion welding step may be carried out at a temperature of at least 1800 °C, or even at least 2000 °C; and a load of at least 1 MPa, or even at least 10 MPa; with a temperature-holding time of, for instance, at least 30 minutes.

In some embodiments, the diffusion welding step may be carried out at a temperature of at most 2300 °C, or even at most 2200 °C.

The mechanical strength of the monolithic joined body of annular discs obtained by diffusion welding is preferably not reduced at the contact areas between the individual annular discs, and ideally the mechanical strength of the joined body of annular discs is as high as the mechanical strength of the individual annular discs.

In a further particular method for joining of the annular discs into the central annular region, annular discs made of a porous silicon carbide material are stacked and brought in contact with one another, and then the stack of porous silicon carbide annular discs is infiltrated with liquid silicon metal to produce a central annular region made of silcon infiltrated silicon carbide material (SiSiC). With this method for joining the annular discs into the central annular region, a monolithic body of stacked annular discs may be formed and the central annular region may be a monolithic body.

In a further particular method for joining of the annular discs into the central annular region, the annular discs are stacked and brought into close contact when they are still green, i.e. prior to sintering, and then the stack of green annular discs is sintered by liquid phase sintering. This method can be applied for material that can be densified by liquid phase sintering, for example for liquid phase sintered silicon carbide (LPS-SiC), cemented carbide and cermets. With this method for joining the annular discs into the central annular region, a monolithic body of stacked annular discs may be formed and the central annular region may be a monolithic body.

### Perforated pipe (basepipe)

As already mentioned above, in some embodiments of the separating device, a perforated pipe 1 is located in the central annular region 6 (see Figures 1, 2 a - 2 b and 3 a - 3 b). The perforated pipe is co-centric with the central annular region. The perforated pipe located inside the central annular region is also referred to hereinafter as the basepipe.

The basepipe is perforated, i.e. provided with holes, in the region of the central annular region; it is not perforated outside the region of the central annular region. The perforation 15 serves the purpose of directing the filtered fluid, i.e. the fluid flow freed of the solid particles, such as for example gas, oil or mixtures thereof, into the interior of the basepipe, from where it can be transported or pumped away.

Pipes such as those that are used in the oil and gas industry for metallic filters (wire wrap filter, metal mesh screen) may be used as the basepipe. The perforation is provided in accordance with patterns customary in the industry, for example 30 holes with a diameter of 9.52 mm may be introduced over a basepipe length of 0.3048 m (corresponding to 1 foot).

Threads 2 are usually cut at both ends of the basepipe 1 and can be used for screwing the basepipes together into long strings.

The basepipe can consist of a metallic material, a polymer or ceramic material. The basepipe may consist of a metallic material such as steel, for example steel L80. Steel L80 refers to steel that has a yield strength of 80 000 psi (corresponding to about 550 MPa). As an alternative to steel L80, steels that are referred to in the oil and gas industry as J55, N80, C90, T95, P110 and L80Cr13 (see Drilling Data Handbook, 8th Edition, IFP Publications, Editions Technip, Paris, France) may also be used. Other steels, in particular corrosion-resistant alloy and high-alloy steels, may also be used as the material for the basepipe. For special applications in corrosive conditions, basepipes of nickel-based alloys may also be used. It is also possible to use aluminium materials as the material for the basepipe, in order to save weight. Furthermore, basepipes of titanium or titanium alloys may also be used.

The inside diameter of the annular discs must be greater than the outside diameter of the basepipe. This is necessary on account of the differences with regard to the thermal expansion between the metallic basepipe and the material from which the annular discs are made and also for technical reasons relating to flow. It has been found to be favourable in this respect that the inside diameter of the annular discs is at least 0.5 mm and at most 10 mm greater than the outside diameter of the basepipe. In particular embodiments, the inside diameter of the annular discs is at least 1.5 mm and at most 5 mm greater than the outside diameter of the basepipe.

The outside diameter of the basepipe is typically from 1 inch to 10 inches.

### Annular end disc

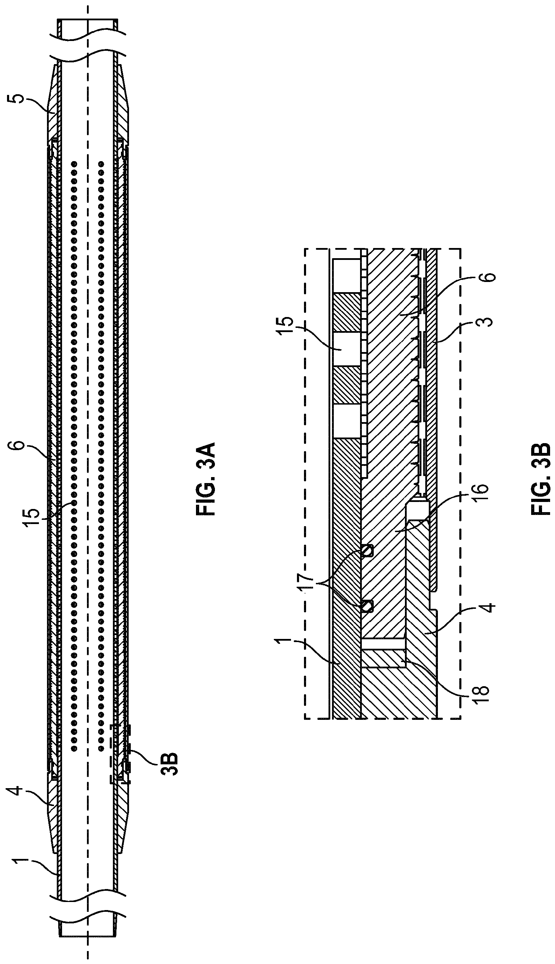

In some embodiments the separating device comprises an annular end disc 16 at the upper end of the central annular region and an annular end disc 16 at the lower end of the central annular region (see Figures 2b and 3b). The annular end discs may be connected with the central annular region 6 by joining. In a specific embodiment, a monolithic body of the central annular region and of the annular end discs is obtained by joining of the annular end discs with the central annular region (see Figures 2b and 3b).

The material of the annular end discs can be a metallic material, or it can be selected from the same materials as described above for the annular discs. Particularly, the annular end discs may comprise a material selected from the same materials as described above for the annular discs. In some embodiments of the separating device, the annular end discs are made from the same material as the annular discs. Sintered silicon carbide (SSiC) or boron carbide may be used as the material for the annular end discs.

For joining of the annular end discs with the central annular region, the same methods as described above for joining of the annular discs can be applied. It is possible to carry out the joining of the stack comprised of annular discs and annular end discs in one step. For joining of the annular end discs with the central annular region, the material of the annular end discs is chosen from the same materials as described above for the annular discs.

Depending on stresses and strains of a particular separating device, the annular end discs can be the same annular discs as described above to obtain the central annular region, but it is also possible that the annular end discs are different from the annular discs. For example, it is not necessary that the annular end discs have spacers on their first major surface. The function of the annular end discs is to incorporate the sealing system (see Figures 2b and 3b).

### End caps

In some embodiments the separating device comprises two end caps 4, 5 (see Figures 1, 2 a - 2 b and 3 a - 3 b) at the upper and lower ends of the central annular region 6. The end caps are produced from metal, usually steel and preferably from the same material as the basepipe.

In a further embodiment of the separating device, the end caps 4, 5 are firmly connected to the basepipe 1. The end caps may be fastened to the basepipe by means of welding, clamping, riveting or screwing. During assembly, the end caps are pushed onto the basepipe after the central annular region and are subsequently fastened on the basepipe. In the embodiments of the separating device as disclosed herein that are shown in Figures 2 a - 2 b and 3 a - 3 b, the end caps are fastened by means of welding. If the end caps are fastened by means of clamping connections, friction-increasing structural design measures are preferably taken. Friction-increasing coatings or surface structurings may be used for example as friction-increasing measures. The friction-increasing coating may be configured for example as a chemical-nickel layer with incorporated hard material particles, preferably diamond particles. The layer thickness of the nickel layer is in this case for example 10 - 25 µm; the average size of the hard particles is for example 20 - 50 µm. The friction-increasing surface structures may be applied for example as laser structuring.

### Sealing system

In some embodiments the separating device comprises a sealing system 17 at the upper end of the central annular region and a sealing system 17 at the lower end of the central annular region. The sealing system can be located between the annular end discs and the perforated pipe or between the annular end discs and the end caps.

The sealing system allows a relative movement of the central annular region in axial direction with respect to perforated pipe. Due to the axial movability of the sealing system the differences in thermal expansion of the central annular region and of the basepipe are compensated. The metallic materials that are preferably used for producing the perforated basepipe, such as for example steel L80, have a greater thermal expansion than the material of the annular discs, such as for example the silicon-carbide ceramic that is preferably used. For steel L80, the coefficient of expansion in the temperature range of 10°C to 200°C is about 10.5 * 10⁻⁶ / K; the coefficient of expansion of sintered single-phase silicon carbide (SSiC) in the temperature range of 10°C to 200°C is 2.8 * 10⁻⁶ / K. If the separating device were used at higher temperatures, for example 100°C, the basepipe would axially expand more than the central annular region. Therefore a compensation for these differences in thermal expansion of basepipe and central annular region is required, and this compensation is achieved by the axial movability of the sealing system.

The sealing system also ensures that the abrasive flows of sand flow through the separating gaps of the central annular region and cannot flow inside the central annular region without being filtered by the separating gaps.

The sealing system preferably comprises at least one O-ring, more preferably at least two O-rings. The O-rings permit the axial movability of the central annular region. The O-rings are either movable, or fixed at the end cap and/or fixed at the annular end disc with the help of an O-ring notch.

Figure 2 a - b and 3 a - b show two embodiments of the separating device as disclosed herein with sealing systems comprising O-rings. Each sealing system comprises two O-rings 17. The O-ring sealing system is located between the annular end discs 16 and the perforated pipe 1 (see Figure 3 b) or between the annular end discs 16 and the end caps 4, 5 (see Figure 2 b). The O-rings are fixed at the annular end disc 16 with the help of an O-ring notch. The annular end discs 16 are diffusion welded with the central annular region 6, thereby forming a monolithic body (see Figures 2b and 3b). The O-ring sealing system allows a relative movement of the monolithic body in axial direction with respect to the end caps 4, 5 and the perforated pipe 1. A damping element 18 can be placed between the end cap 4 and the annular end disc 16, but it is also possible not to use a damping element. The material of the damping element may be for example polytetrafluoroethylene (PTFE).

In some embodiments of the separating device disclosed herein, the ratio s / L is more than 0.001, more than 0.005, more than 0.01, or even more than 0.03. L is the length of the central annular region including annular end discs and s is the distance between the inner diameter of the central annular region and the outer diameter of the perforated pipe. The distance s can also be described as the difference of the inner diameter of the central annular region and the outer diameter of the basepipe divided by 2. The concentric stack of joined annular discs is a stiff unit and not as flexible under bending as the basepipe. The basepipe is able to bend within the central annular region with the ratio s / L as described above. The ratio s / L is not more than 10.

### Shroud

To protect the brittle-hard annular discs from mechanical damage during handling and fitting into the borehole, the separating device may be surrounded by a tubular shroud 3 (see Figure 1) that can be freely passed through by a flow. This shroud may be configured for example as a coarse-mesh screen and preferably as a perforated plate. The shroud may be produced from a metallic material, such as from steel, particularly from corrosion-resistant steel. The shroud may be produced from the same material as that used for producing the basepipe.

The shroud can be held on both sides by the end caps; it may also be firmly connected to the end caps. This fixing is possible for example by way of adhesive bonding, screwing or pinning; the shroud may be welded to the end caps after assembly.

The inside diameter of the shroud must be greater than the outside diameter of the annular discs. This is necessary for technical reasons relating to flow. It has been found to be favorable in this respect that the inside diameter of the shroud is at least 0.5 mm and at most 15 mm greater than the outside diameter of the annular discs. The inside diameter of the shroud may be at least 1.5 mm and at most 5 mm greater than the outside diameter of the annular discs.

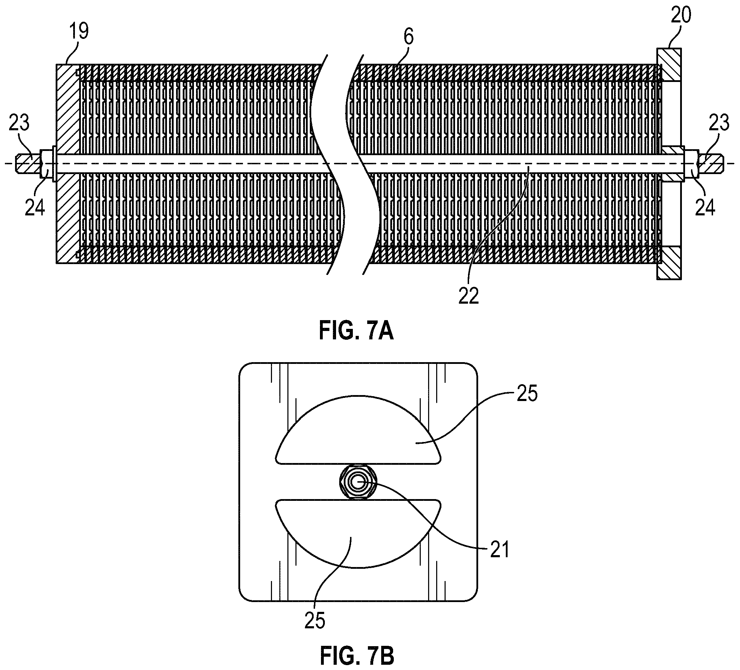

Figures 7 a - 7 b show a further embodiment of the separating device. In this embodiment, no basepipe is used. Figure 7 a shows a cross-sectional view of this embodiment. The separating device comprises a central annular region 6 along a central axis. The central annular region is defined by a concentric stack of at least three joined annular discs. The annular discs used for this embodiment are the same than those used for the embodiments described above. The joining methods used for this embodiment are also the same methods as described above for the other embodiments. At the upper end of the central annular region 6 there is a top plate 19, at the lower end of the central annular region 6 there is a base element 20. Figure 7b shows a plan view of the separating device representing the base element. The top plate can be a cylindrical disc with a central bore hole. The base element shown in Figure 7b also is provided with a central bore hole 21. A tie rod 22 with threads 23 at the lower and the upper end is put through the bore holes of the top plate and the base element. Screws 24 are tightened at both ends of the tie rod, resulting in a force-locking connection of the central annular region with the top plate and the base element. The filtered fluid, i. e. the fluid flow freed of the solid particles, such as for example gas, oil or mixtures thereof, is directed from the interior of the central annular region towards the outlet openings 25 of the base element.

The separating device according to the present disclosure may be used for removing solid particles from a fluid. A fluid as used herein means a liquid or a gas or combinations of liquids and gases.

The separating device according to the present disclosure may be used in extraction wells in oil and/or gas reservoirs for separating solid particles from volumetric flows of mineral oil and/or natural gas. The separating device may also be used for other filtering processes for removing solid particles from fluids outside of extraction wells, processes in which a great abrasion resistance and a long lifetime of the separating device are required, such as for example for filtering processes in mobile and stationary storage installations for fluids or for filtering processes in naturally occurring bodies of water, such as for instance in the filtering of seawater. The separating device disclosed herein can also be used in a process for extracting ores and minerals. In the extraction of ore and many other minerals, there are problems of abrasion and erosion in the removal of solid particles from fluid flows. The separating device according to the present disclosure is particularly suitable for the separation of solid particles from fluids, in particular from mineral oil, natural gas and water, in extraction wells in which high and extremely high rates of flow and delivery volumes, and consequently high differences in pressure, occur between the inflow side and the outflow side of the separating device.

The present disclosure will be described in more detail by the following examples.

### Examples

### Example 1: Joining of Annular Discs by Diffusion Welding

For the joining process, annular discs according to figure block 4 with 24 spacers were used. The outer diameter of the annular discs was 172 mm, the inner diameter was 148 mm. The axial thickness of the annular discs including spacers was 6 mm. The annular discs were made from fine-grained sintered silicon carbide (SSiC; 3MTM silicon carbide type F, 3M Technical Ceramics, Kempten, Germany) with a mean grain size of about 5 µm. The annular discs were used as-lapped. The annular discs were stacked in such a way that the spacers of adjacent annular discs lie on top of each other. The number of the annular discs stacked in this way was 80. The stacked annular discs were joined by diffusion welding in a hot-pressing process in a nitrogen atmosphere. The joining temperature was 2170 °C, the load applied on the stack of annular discs was 70 MPa. The load is based on the contact area during the joining process which is the total planar contact area of all spacers of an individual annular disc. The temperature-holding time was 1 hour. For diffusion welding in the hot-press the surfaces of adjacent rings were in intimate contact. The result was a monolithic stack with a rigid, permanent bond of former individual rings. The polished section in axial direction of the diffusion welded stack of annular discs shows that the monolith consists homogeneously of a sintered silicon carbide with a maximum grain size of 1 mm, there are no seams between the former individual rings.

### Example 2: Test for internal and external pressure resistance

The monolithic stack obtained in Example 1 was assembled with a basepipe and with annular end discs, end caps and load springs at both ends of the monolithic stack. The load springs were used between the monolithic stack and the end caps for positioning of the monolithic stack. The annular end discs had a height of 25 mm and were made from stainless steel. For the basepipe, steel L80Cr13 was used. The so assembled separating device was used for further testing.

The effective length of the separating device, i.e. the height of the concentric stack, is 500 mm. The filter width is 250 µm. The diameter of the basepipe is 139.7 mm (5½ inches).

In a high-pressure chamber, tests for internal pressure resistance (burst pressure test), i.e. subjecting the separating device to internal pressure, and tests for external pressure resistance (collapse pressure test), i.e. subjecting the separating device to external pressure, are carried out with the separating device assembled as described above. The test setup and the procedure correspond to the setup and method shown in ISO 17824, First Edition, 2009-08-15, in Annex A (Collapse pressure test) and B (Burst pressure test).

The high-pressure chamber has an inside diameter of 203 mm (8 inches) and a usable length of 1200 mm (4 ft) and can withstand loading up to about 491 bar (49.1 MPa, 7121 psi).

A viscous mixture of methylcellulose, water and powdered limestone of various particle sizes in accordance with ISO 17824 Annex A.4 is used as the pressure transmission medium (fluid loss control pill). The task of the pressure transmission medium is to block and seal off the separating gaps (filter gaps) in such a way that a difference in pressure can be built up. The solids loading of the fluid loss control pill was 214 kg/m³. The dynamic viscosity was 0.15 Pa*s at a shear rate of 511 1/s.

The maximum pressure reached in the test for the internal pressure resistance (burst pressure test) is 40 bar.

Defined as the criterion for failure in the test for internal pressure resistance is the pressure at which the pressure drops abruptly (maximum pressure). If the pressure drops abruptly, the separating device allows coarser particles than correspond to the filter width to pass through (loss of sand control).

The abrupt pressure drop was caused by fracture of the monolithic stack.

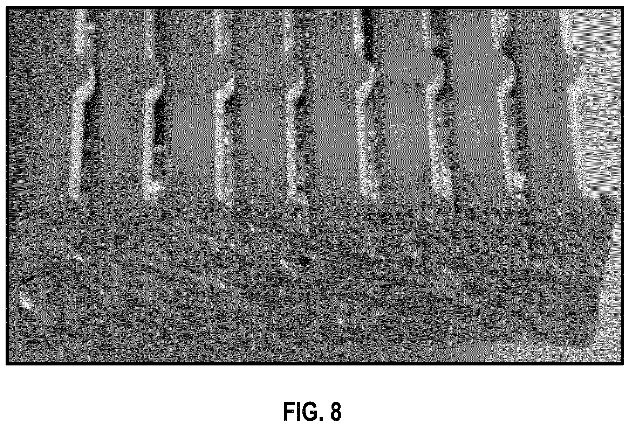

Figure 8 shows a fracture surface of the diffusion welded stack of annular discs after the burst pressure test. The picture shows that the fracture surface is homogeneous, there are no seams between the individual annular discs of the stack.

Defined as the criterion for failure in the test for external pressure resistance is the pressure at which the pressure drops abruptly (maximum pressure). If the pressure drops abruptly, the separating device allows coarser particles than correspond to the filter width to pass through (loss of sand control).

The maximum pressure reached in the test for the external pressure resistance (collapse pressure test) is 491 bar. This maximum pressure is the maximum available external pressure load of the high-pressure chamber used for the test, The separating device did not fail in this test.

## Claims

1. A separating device for removing solid particles from fluids, comprising:
a concentric stack of at least three annular discs (7) defining a central annular region (6) along a central axis, each annular disc (7) having first (8) and second (11) opposed major surfaces that are perpendicular to the central axis, wherein the first major surfaces (8) of a first annular disc and a second annular disc each have at least one spacer (9),
wherein the first major surface (8) of the first annular disc is joined to the second major surface (11) of the second annular disc defining a first planar contact area (10) and a first separating gap (14), and the first major surface (8) of the second annular disc is joined to the second major surface (11) of the third annular disc, defining a second planar contact area (10) and a second separating gap (14), and
wherein each annular disc (7) comprises a material independently selected from the group consisting of (i) ceramic materials; (ii) mixed materials having fractions of ceramic or metallic hard materials and a metallic binding phase; and (iii) powder metallurgical materials with hard material phases formed in-situ.

2. The separating device according to claim 1, further comprising:
one or more additional annular discs (7), wherein each additional annular disc (7) has first (8) and second (11) opposed major surfaces that are perpendicular to the central axis, wherein the first major surface (8) of each additional disc has at least one spacer (9), and
wherein the first major surface (8) of each additional annular disc (7) is joined to the second major surface (11) of an adjacent annular disc (7) defining a planar contact area (10) and a separating gap (14); and
wherein each annular disc (7) comprises a material independently selected from the group consisting of (i) ceramic materials; (ii) mixed materials having fractions of ceramic or metallic hard materials and a metallic binding phase; and (iii) powder metallurgical materials with hard material phases formed in-situ.

3. The separating device according to claim 1 or 2, further comprising:
a perforated pipe (1) which is co-centric with and located in the central annular region (6).

4. The separating device according to any of claims 1 to 3, further comprising, alone or in combination,
- an annular end disc (16) at the upper end of the central annular region and an annular end disc (16) at the lower end of the central annular region,
- an end cap (4) at the upper end of the central annular region and an end cap (5) at the lower end of the central annular region,
- a sealing system (17) at the upper end of the central annular region and a sealing system (17) at the lower end of the central annular region, the sealing systems being located between the annular end discs (16) and the perforated pipe (1) or between the annular end discs (16) and the end caps (4, 5).

5. The separating device according to claim 4, wherein the joined body of the central annular region (6) and of the annular end discs (16) is a monolithic body.

6. The separating device according to any of claims 1 to 5, being **characterized by** one or more of the following features:
a) the axial projection of the annular discs (7) at the inner and the outer circumference is circular
b) the annular discs (7) are stacked in such a way that the spacers (9) lie on top of each other
c) the annular end discs (16) are made from the same material as the annular discs (7).

7. The separating device according to any of claims 4 to 6, wherein the sealing system (17) comprises at least one O-ring, preferably at least two O-rings.

8. The separating device according to any of claims 1 to 7, wherein the first major surface (8) has a surface area, and wherein the planar contact area (10) of the first major surface (8) is from 2 to 80% of the surface area of the first major surface.

9. The separating device according to any of claims 3 to 8, wherein the ratio s / L is more than 0.001, and wherein L is the length of the central annular region (6) including annular end discs (16) and s is the distance between the inner diameter of the central annular region and the outer diameter of the perforated pipe (1).

10. The separating device according to any of claims 1 to 9, wherein the material of annular discs (7) being sintered silicon carbide (SSiC) or boron carbide.

11. The separating device according to any of claims 4 to 10, wherein the material of annular end discs (16) being sintered silicon carbide (SSiC) or boron carbide.

12. A process for making the separating device of any of claims 1 to 11, comprising:
joining the annular discs (7) into the central annular region (6), wherein joining comprises bringing the annular discs (7) into contact with one another and diffusion welding the annular discs (7) in the presence of a shielding gas atmosphere;
further wherein the joining takes place at a temperature of at least 1600 °C and a load of at least 10 kPa with a temperature-holding time of at least 10 minutes; and
further wherein the central annular (6) region is a monolithic body.

13. The process according to claim 12, wherein during the joining step the annular discs (7) experience deformation in the direction in which force is introduced of less than 5%, and wherein the creep rate of the annular discs (7) during the joining step is lower than 2*10⁻⁴ 1/s.

14. The process according to claim 12 or 13, wherein the diffusion welding process is carried out at a temperature of at least 1800 °C and a load of at least 1 MPa, with a temperature-holding time of at least 30 minutes.

15. Use of the separating device of any of claims 1 to 11 for removing solid particles from fluids
in a process for extracting fluids from extraction wells, or
in water or in storage installations for fluids, or
in a process for extracting ores and minerals.
